# EUROPEAN PATENT APPLICATION

(11) **EP 4 238 543 A1**
(43) Date of publication of application: **06.09.2023**
(21) Application number: 23160086.7
(22) Date of filing: 06.03.2023
(51) Int. Cl.: A61G 5/10, A47C 31/12, B60N 2/24, B60N 2/42

(54) **MACHINE-ASSISTED METHOD OF DESIGNING AND MANUFACTURING A CUSTOM ANATOMICAL SEAT CUSHION BASED ON ANTHROPOMETRIC MEASUREMENTS**

(30) Priority: 04.03.2022 US 202263268870 P
(71) Applicant: Amylior Inc., Vaudreuil-Dorion, QC J7V 5V5 (CA)
(72) Inventor: LESSARD, Jean-Luc, Sherbrooke (Québec), J1J 3K4 (CA)
(74) Representative: Cabinet Laurent & Charras

(57) **Abstract**

A machine-assisted method of manufacturing a customized anatomical seat cushion for a user is provided, the method comprising the steps of capturing anthropometric measurements of the user in a seated position; inputting the captured anthropometric measurements in a three-dimensional (3D) computer-aided design (CAD) model to reproduce buttock of the user; generating a 3D anatomical seat cushion representation fitting the shape of the user based on the 3D CAD model of the buttock of the user; and machining a support structure according to the generated 3D anatomical seat cushion.

## Description

### CROSS-REFERENCE TO RELATED APPLICATIONS

The present patent application claims the benefits of priority of United States Provisional Patent Application No. 63/268,870, entitled "Method of designing and manufacturing an anatomical seat cushion based on anthropometric measurements", and filed at the United States Patent and Trademark Office on March 4, 2022.

### FIELD OF THE INVENTION

The present invention generally relates to anatomical seat cushions and, more particularly, to a method of 3D modelling and manufacturing an anatomical seat cushion.

### BACKGROUND OF THE INVENTION

While anatomical seat cushions are known in the art, it is desirable to provide patients with a seat cushion custom formed to their needs. Understandably, the custom seat cushions may provide a greater comfort and may accelerate rehabilitation or prevent pressure ulcer and positioning issues.

Nevertheless, designing a custom seat cushion is a lengthy and costly procedure typically requiring the use of negative molds which cannot hardly be modified once a preliminary shape has been determined.

The US patent no 4,615,856 discloses a common method for making a custom molded seat cushion. The disclosed method uses bead-filled latex bags as buttocks and back supporting cushions. The method further uses a positive mold to create the cushions and is therefore limited in the number of customizations that may be applied to the cushions and to the time and ease of making the same.

The US patent no. 9,330,206 teaches a computer-implemented method to produce a three-dimensional (3D) model of an implant. The method produces an image including a defective portion and a non-defective portion of a surface of a tissue of interest to determine the shape of a medical device to be implanted into a subject. The defective and non-defective portions are then superimposed into a 3D template to obtain a 3D shape of the medical device.

Accordingly, methods of scanning and generating body parts and of manufacturing customized seats with molds are known in the art, however there is a need for a method of generating and manufacturing a custom seat cushion that is fast, cheap, that allows personalized and detailed customization and that does not require a mold.

### SUMMARY OF THE INVENTION

The shortcomings of the prior art are generally mitigated by a machine-assisted method of manufacturing a customized anatomical seat cushion for a user, the method comprising the steps of capturing anthropometric measurements of the user in a seated position, inputting the captured anthropometric measurements in a three-dimensional (3D) computer-aided design (CAD) model to reproduce buttock of the user, generating a 3D anatomical seat cushion representation fitting the shape of the user based on the 3D CAD model of the buttock of the user and machining a support structure according to the generated 3D anatomical seat cushion.

The method may further comprise applying markers on the user to identify predetermined landmark prior to capturing the anthropometric measurements. The method may further comprise repositioning the user to capture additional anthropometric measurements for specific clinical needs of the user. The method may further comprise positioning the user on a flat surface prior to capturing the anthropometric measurements: The method may further comprise measuring the anthropometric measurements of the user using an anthropometer.

The method may further comprise measuring postural characteristics of the user. The postural characteristics of the individual may comprise any one or a combination of pelvic tilt posterior or anterior angles, angle of the pelvic rotation and height of the popliteal fossa.

The method may further comprise capturing contextual measurements adapted to the user intended use of the cushion.

The method may further comprise generating one or more sketches in the 3D CAD model, the generation of the 3D CAD seat cushion using the one or more sketches. The generation of the 3D CAD of the seat cushion may use numerical functions applied over the one or more sketches. The numerical functions may be any one or a combination of sketch extrusion, sketch loft and sketch cut.

The method may further comprise inputting one or more requirements based on a medical condition of the user. The generation of the 3D CAD seat cushion may be further based on the inputted requirements. The inputted requirement may be selected from any one of width of the cushion, depth of the cushion, hardness of the foam to be used, rear distance of the cushion, size of the bevel, presence or absence of hard transfer foam, presence or absence of unequal depth areas, shape of a front area of the cushion and spacing for the sacrum of the user. The inputted requirements may be any one or a combination of sacral clearance, grand trochanter clearance, abduction clearance, adduction clearance and anti-thrust support.

The method may further comprise trimming the machined seat cushion to adjust the machined seat cushion to specific needs of the user.

The machining of the cushion may use polyurethane foam or polystyrene foam.

The machining of the cushion may further comprise using additive technology device. The additive technology device may be a foam 3D printer.

The method may further comprise automatically transferring the 3D CAD cushion to the machining process.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### BRIEF DESCRIPTION OF THE DRAWINGS

The above and other aspects, features and advantages of the invention will become more readily apparent from the following description, reference being made to the accompanying drawings in which:
FIG. 1 is an isometric view of a tri-dimensional (3D) computer-assisted design (CAD) model of a buttock shape in accordance with the principles of the present invention.
FIG. 2 is an isometric view of sketches which define the 3D CAD model of Figure 1.
FIG. 3 is a front view of a sketch of the 3D CAD model of Figure 2 shown with illustrative measurements.
FIG. 4 is a flowchart of exemplary steps illustrating a method to obtain a custom cushion base on anthropometric measurements in accordance with the principles of the present invention.
FIG. 5A is a side view of a patient comprising markers on anatomic landmarks used to take measurement on patient in accordance with principles of the present invention.
FIG. 5B is a top view of the markers shown on the patient of FIG. 5A
FIG. 6 is an illustration of three exemplary devices to acquire measurements on patients in accordance with the principles of the present invention.
FIG. 7A is a screenshot of an exemplary interface for inputting anthropometric measurements for building a features cushion in accordance with the principles of the present invention.
FIG. 7B is a screenshot of an exemplary interface for inputting a limited number of anthropometric measurements in a simplified form to build simpler cushion in accordance with the principles of the present invention.
FIG. 8A is an illustration of a patient being measured using a measurement device of FIG. 6.
FIG. 8B is an illustration of a patient being measured using a measurement device of FIG. 6.
FIG. 8C is an illustration of a patient being measured using a measurement device of FIG 6.
FIG. 9A is a screenshot of an exemplary interface for entering and displaying cushion parameters and clinical positioning parameters for designing a cushion.
FIG. 9B is an exemplary screenshot of logging documents for the cushion parameters and the clinical positioning parameters in accordance with the principles of the present invention.
FIG. 10 is an isometric view of an exemplary initial CAD model of a cushion obtained by subtracting the 3D buttock shape from a rectangular cushion shape in accordance with the principles of the present invention.
FIG. 11 is an isometric view of an embodiment of a custom cushion resulting from a method of designing and manufacturing a custom cushion in accordance with the principles of the present invention, the resulting having enhance support and positioning requirement.
FIG. 12 is an isometric view of an embodiment of a support structure being machined into a custom cushion in accordance with the principles of the present invention.

### DETAILED DESCRIPTION OF THE INVENTION

A novel machine-assisted method of designing and manufacturing a custom anatomical seat cushion based on anthropometric measurements will be described hereinafter. Although the invention is described in terms of specific illustrative embodiments, it is to be understood that the embodiments described herein are by way of example only and that the scope of the invention is not intended to be limited thereby.

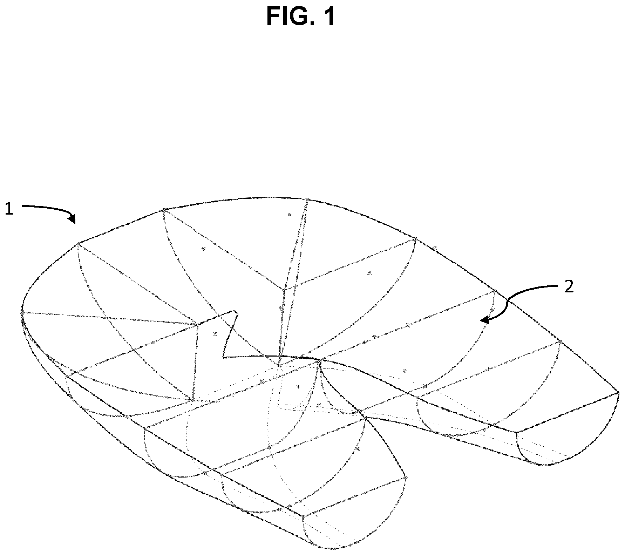

Broadly, the present invention relates to a method of using a three-dimensional computer-aided design (hereinafter "3D CAD") model 1, as illustrated in FIG. 1, to design and manufacture a custom seat cushion. The custom seat cushion is developed to accommodate, conform and/or match the anatomical specificity of an individual buttock. The designed and manufactured seat cushion may be used for wheelchair users or adapted seated for individual with physical disabilities.

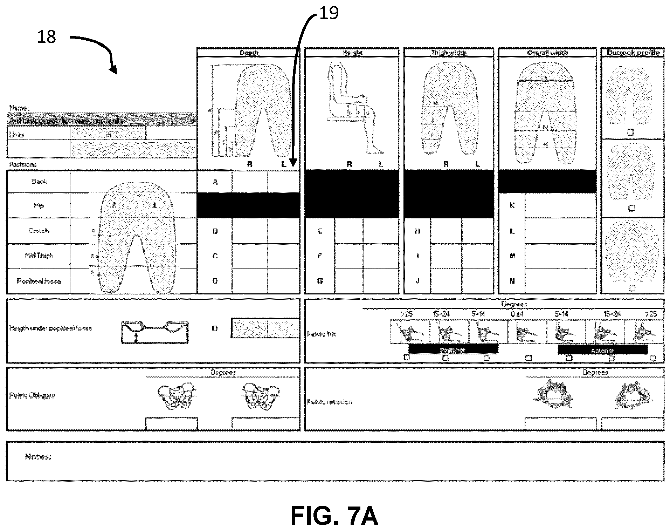

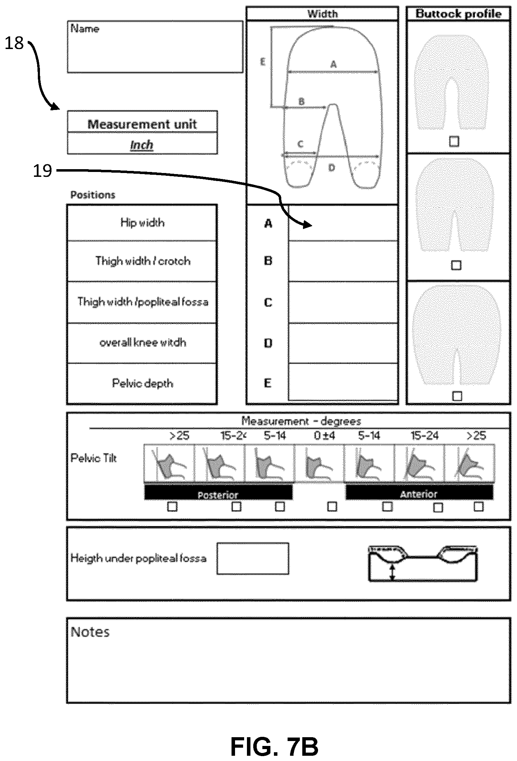

The method generally comprises the step of capturing a limited number of anthropometric measurements 19, as exemplified at FIGS. 7A and 7B. The captured anthropometric measurements 19 are used as input to design an initial 3D CAD model 1. The initial 3D CAD model 1generally represents the shape of an individual 15 when seated on a surface. The method may further comprise optimizing the 3D CAD model 1 to obtain a relatively controlled pressure distribution when the individual is sitting on a counterpart having the same geometry.

Referring to FIG. 7A, the anthropometric measurements 19 may comprise depth or width of the thighs of the patient, overall width of the buttock or thighs at different markers, such as rear, grand troch, groin, mid-thigh and/or knee, buttock profile, pelvic tilt posterior or anterior angle, angle of the pelvic rotation and/or height of the popliteal fossa.

Referring now to FIG. 7B, a subset of anthropometric measurements 19 are captured. The limited number of parameters or requirements generally allows expediting the manufacture of a custom seat cushion while limiting the number of variations in the design of the 3D CAD model 1. In some embodiments, one or more anthropometric measurement 19 may be determined by a clinical study.

The presence of the pelvic tilt angle measurement may allow to locate precisely the addition of a protection zone on the custom seat cushion. In some embodiments, the protection zone may comprise one or more specially designed air cell inserts, gel inserts or viscoelastic foams. The protection zone is typically located in the ischium / sacral area of the cushion to further protect the patient.

The captured anthropometric measurements may be related to the anatomy of the patient or may depend on the context of use. As such, an anthropometric measurement may measure different portion of the anatomy of the patient when said patient is seated in a narrow wheel chair or with legs being bended at a specific angle. As such, the said contextual measurements shall depend on external elements or on a specific position of the user.

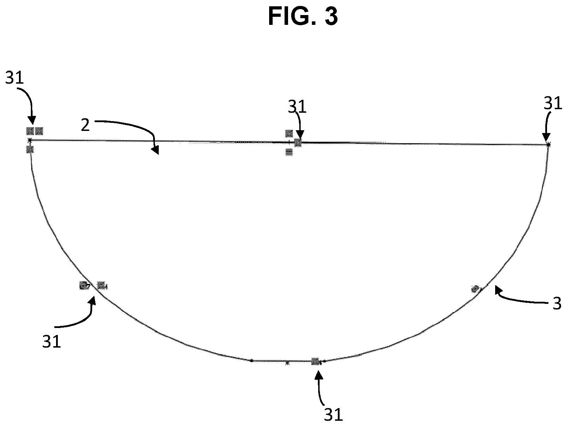

The 3D CAD model 1 may be generated using any suitable CAD software including, but not limited to, Solidworks^{™}. Referring now to FIGS. 1 to 3, in some embodiments, the 3D CAD model 1 may comprise a plurality of sketches 2. Each of the sketches 2 may comprise a plurality of base elements 3 such as but not limited to, circles, ellipsoids, lines or any other suitable base element. Referring to FIG. 3, the base elements 3 may have constraints 31 (such as, but not limited to, dimension, proportion, tangent, end point...) therein so that the sketch 2 represents a section of an anatomical body. The sketches 2 may be configurable according to one or more specific anthropometric measurements 19 of an individual 15.

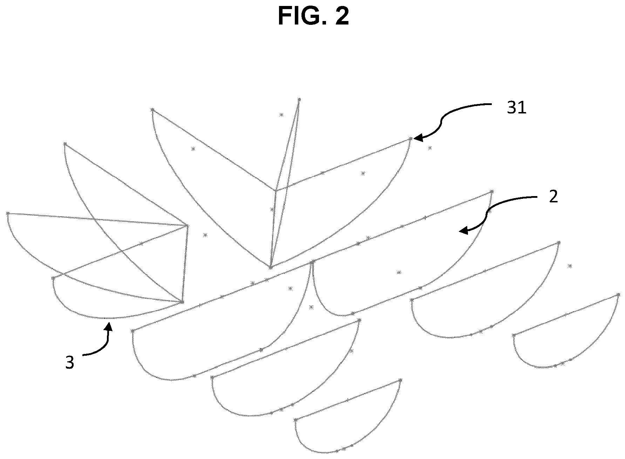

Referring now to FIG. 2, the 3D CAD model 1 may comprise a plurality of sketches 2, each sketch 2 being in relation with one or more of the other sketches 2. Referring now to FIG. 1, the 3D modeling process may use numerical functions such as, but not limited to, sketch extrusion, sketch loft or sketch cut, to generate the 3D model 1 representing a portion of a buttock that comes in contact with a seat cushion. In a preferred embodiment, the 3D model 1 represents at least the portion of a patient's 15 anatomy that comes in contact with a seat cushion.

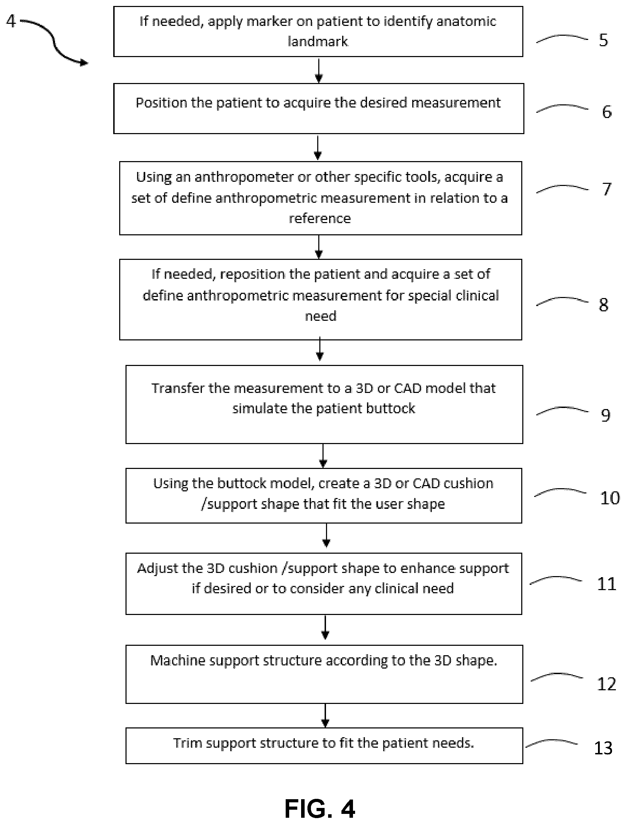

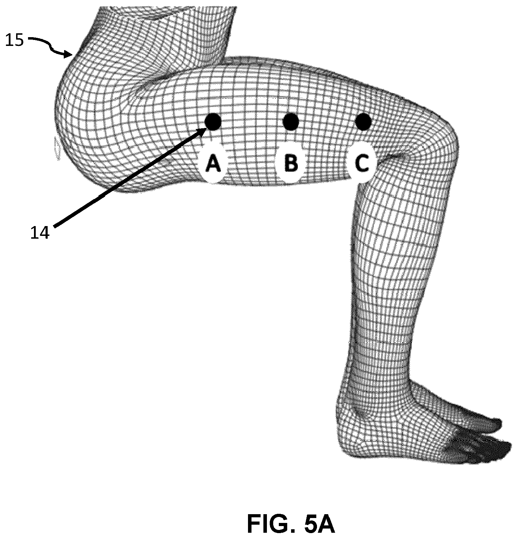

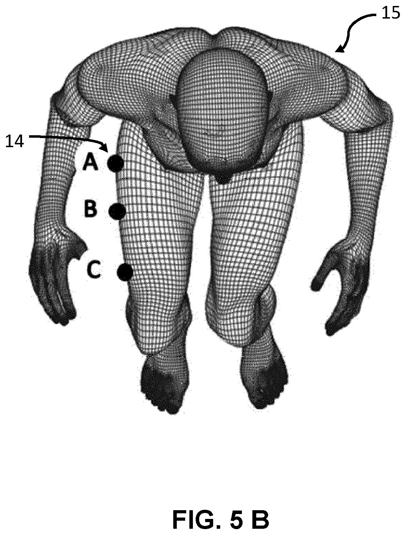

Referring now to FIG. 4, an embodiment of a method 4 of designing and manufacturing an anatomical cushion 25 based on anthropometric measurements is illustrated. The method 4 may comprise an initial step 5 of applying one or more markers on the patient 15 to identify one or more anatomic landmarks 14 (as shown in FIG. 5). This initial step 5 may be performed to assist in obtaining an accurate measurement. In some embodiments, the initial step 5 generally aims at identifying a landmark and repeatedly measuring patient from the same points.

The method may further comprise positioning the patient to take a complete measurement set 19 (described further below) 6. In some embodiments, the patient 15 may be positioned on a flat chair 20 if safety permits. Alternatively, the measurements may be taken while the patient 15 remains in a lying position, such as in a bed. In further embodiments, the patient 15 may be positioned in yet another position to capture measurements of an abnormal posture such as, but not limited to, pelvic obliquity, pelvic rotation or windswept deformity.

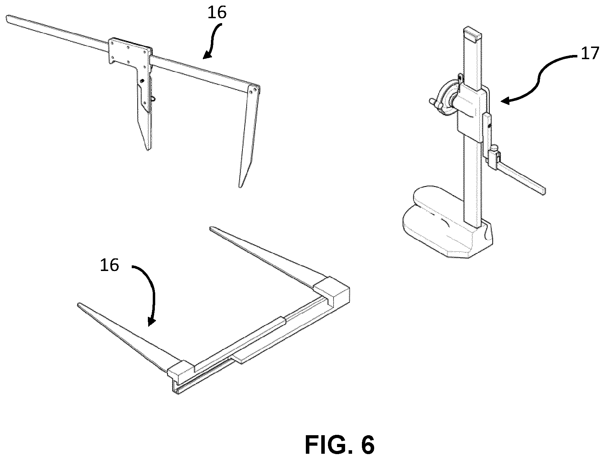

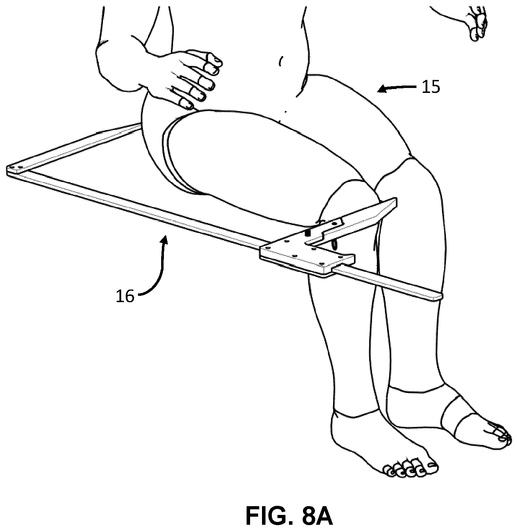

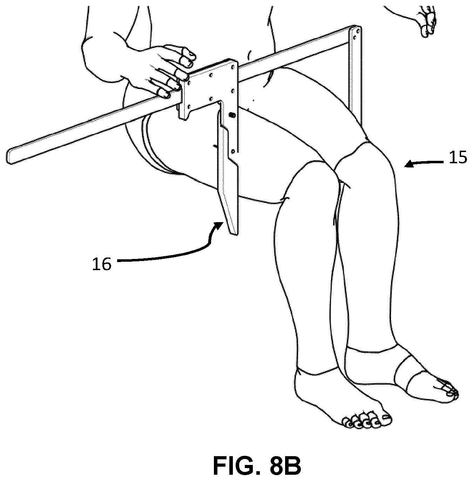

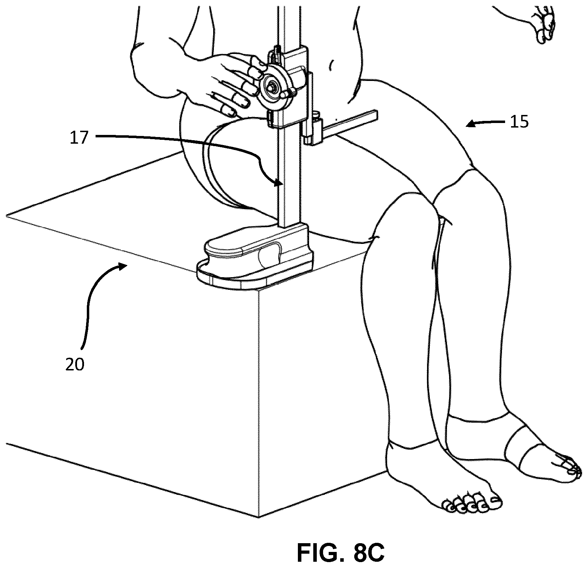

The method further comprises the step of obtaining the anthropometric measurements 7. The anthropometric measurements 19 may comprise length, width, height, or any other relevant dimensions, measured directly on the patient 15. The step 7 of obtaining the anthropometric measurements 19 may comprise using an anthropometer 16 (as shown in FIGS. 6 and 8A to 8C), a specific measurement tool 17, or any other suitable measurement apparatus or device. The method further comprises storing the obtained measurements 19 in any known format. In some embodiment, the obtained anthropometric measurements 19 may be stored, compiled and/or recorded in a logging document 18, such as but not limited to a printed sheet, an electronic spreadsheet or a web-based document (as shown in FIGS. 7A and 7B). In certain embodiments, the method may further comprise compiling additional information on the patient which may be helpful in the manufacturing of the cushion 25. In yet other embodiments, the storing of obtained measurements 19 may be embodied as a graphical user interface (GUI) such as a desktop interface, a web-based interface or a mobile application to be executed on a computerized device.

In certain embodiments, the method may further comprise repositioning the patient 15 to acquire additional anthropometric measurements 8. The additional anthropometric measurements may be acquired based on any special clinical needs of a patient 15. In some embodiments, the patient 15 may be assisted by a therapist. In such embodiments, the therapist may position the patient to correct or accommodate different abnormal postures.

, The method may further comprise transferring or communicating the recorded anthropometric measurements 19 to a 3D CAD software or program. The method further comprises using the 3D CAD program to generate a 3D CAD model 9. In a preferred embodiment, the parameters or constraints of each sketch 2 are defined in 3D CAD model 1. The method thus comprises the step of defining the sketches 2 of the 3D CAD model 1. The 3D CAD model 1 may be updated by refreshing the numerical functions of the model 1. The functions may comprise but are not limited to sketch extrusion, sketch loft, sketch cut or any other suitable function. The resulting 3D CAD model 1 may represent a portion of the patient's 15 anatomy intended to come in contact with a seat cushion.

The method may further comprise a step 10 comprising using the updated and/or refreshed 3D model of the buttock shape 1 to generate an initial shape of the cushion 24. In certain embodiments, the initial shape of the cushion 24 may be obtained by subtracting the 3D buttock shape 1 from a generally rectangular cushion shape. One skilled in the art shall understand that the step of generating the 3D CAD model 9 may be simultaneous to the step of generating the initial shape 10 of the cushion 24 directly using the same sketch 2 used to define the 3D CAD model 1.

The method may further comprise recording a set of cushion parameters 22 and clinical positioning requirements 23 to adjust the 3D cushion 25 and/or support shape 30 to enhance support if desired or required 11. In certain embodiments, the cushion parameters 22 and clinical positioning requirements 23 may be determined by a therapist or any other specialist. The determined parameters 22 and requirements 23 may be stored or logged, such as but not limited to, in a document 21, a database, a printed sheet, a spreadsheet, a web-based document or in any other suitable format/medium. The clinical positioning requirements 23 may include, but are not limited to, sacral clearance 26, grand trochanter clearance 27, abduction, adduction stopper (not shown), anti-thrust support or any other relevant requirement. The clinical positioning requirements 23 may further include different parameters to adjust the shape of the cushion 25 to enhance support or to consider any clinical needs that can be defined in the positioning parameter. The cushion parameters 22 and clinical positioning requirements 23 may be used iteratively to modify the initial shape of the cushion 24 in order to generate the final cushion shape 25.

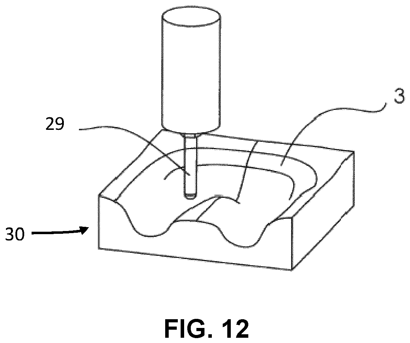

Once the shape satisfies the requirements 22, 23 of the patient 15, the method may further comprise a step 12 comprising machining the support structure 30 into a custom cushion 25 using suitable machining tools 29 (shown in FIG. 12). The custom cushion 25 may be machined or manufactured using additive technologies such as but not limited to 3D printing. In yet other embodiments, the method may further comprise automatically transferring or communicating the resulting 3D model or manufacturing parameters of the seat cushion to a machine tool or to an additive technology device, such as a 3D printer. As such, the designed custom seat cushion may be automatically manufactured based on data from the 3D CAD model 1 of the said seat cushion 25.

The support structure 30 may be made of polyurethane foam, polystyrene foam or any suitable material that will meet the support needs. In some embodiments, the method may comprise trimming the manufactured custom cushion 25 to fit the patient needs, parameters, requirements and/or preferences 13.

Referring now to FIGS.8A to 8C, an exemplary step of capturing measurements 19 on a patient 15 is illustrated. The patient 15 is typically in a seated position to capture de measurements. The patient 15 may be seated on a flat surface such as a wood panel or any other type of semi-hard or hard flat surface. Any measurement device known in the art may be used to capture the measurements on the patient 15.

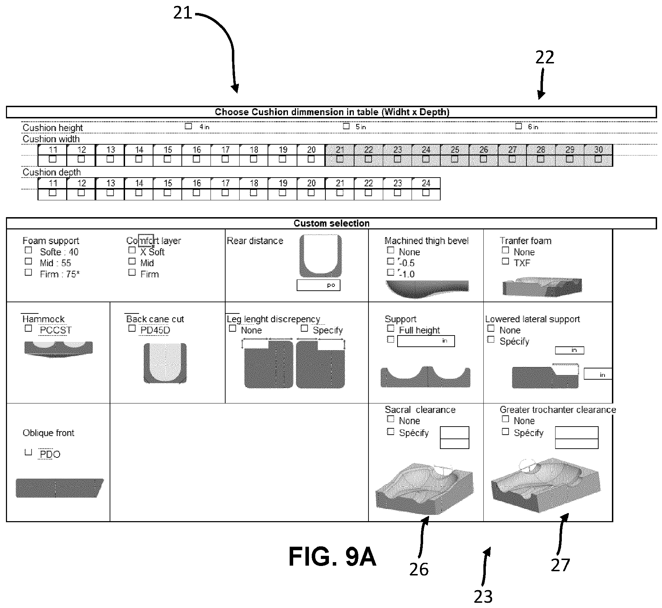

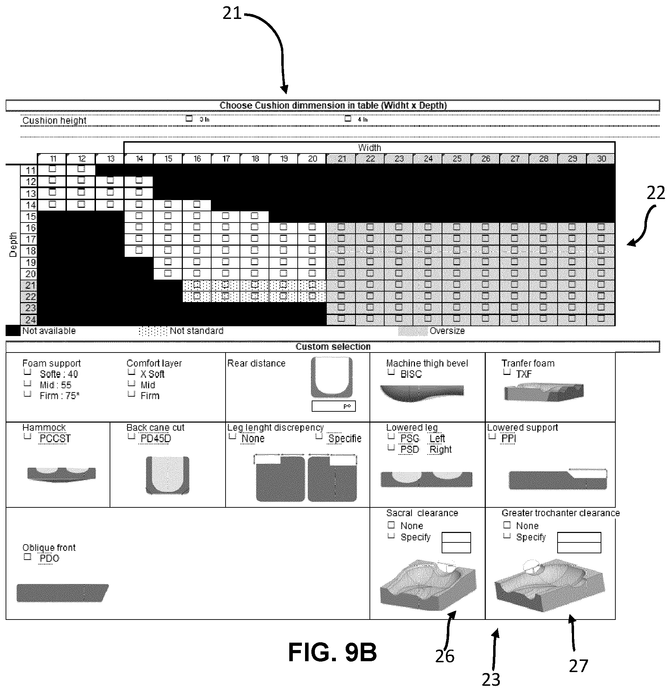

Referring to FIGS. 9A and 9B, embodiments of graphical user interfaces to input the requirements 22, 23 of the seated cushion 25 to be manufactured are illustrated. Referring to FIG. 9A, the interface 21 may comprise setting or requirements 22 such as width and/or depth of the cushion, determining the hardness and/or desired comfort of the foam to be used, specifying the rear distance of the cushion, the size/level of the bevel, the presence or absence of hard transfer foam, the general section of the cushion, unequal depth areas, shape of the front area, spacing for the sacrum and any other relevant requirements 22 of the cushion. The graphical interface may further include one or more clinical positioning requirements 23 for a pommel or a lateral profile generally aiming at controlling adduction, abduction or external rotation.

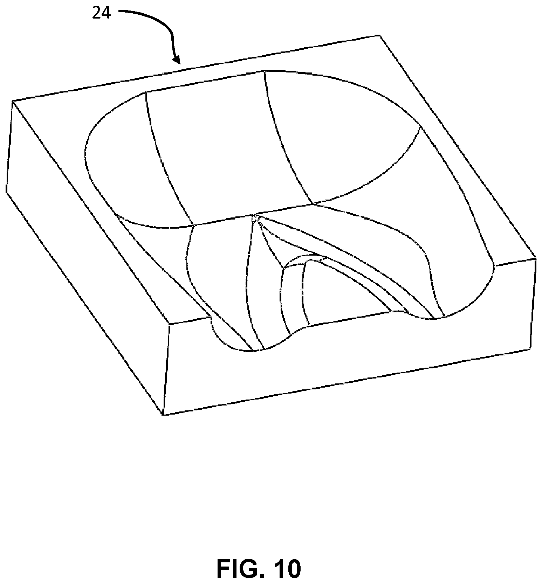

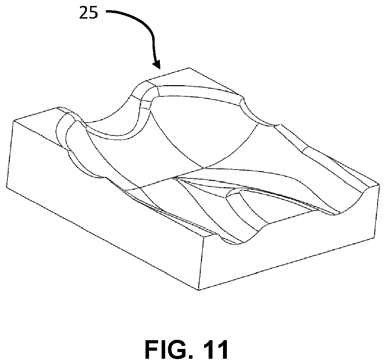

Referring now to FIG. 10, an exemplary initial CAD model 24 of a cushion obtained by subtracting the 3D buttock shape from a rectangular cushion shape, generally a support structure 30, is illustrated. Referring now to FIG. 11, an exemplary resulting CAD model of a cushion 25 obtained after applying one or more specific requirements as described above.

Referring now to FIG. 12, an embodiment of a support structure 30 being machined into a custom cushion 25 is illustrated. In the illustrated embodiment, the support structure 30 is being sculpted into the custom cushion 25 based on the 3D CAD model 24 of the cushion using a machining tool 29. The support structure 30 is typically made of foam or any supporting material providing an adequate comfort level to the user, such as polyurethane foam or polystyrene foam. Understandably, any type of machining tool 29 adapted to sculpt or create the shape of the cushion 25 may be used.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art.

## Claims

1. A machine-assisted method of manufacturing a customized anatomical seat cushion for a user, the method comprising the steps of:
capturing anthropometric measurements of the user in a seated position;
inputting the captured anthropometric measurements in a three-dimensional (3D) computer-aided design (CAD) model to reproduce buttock of the user;
generating a 3D anatomical seat cushion representation fitting the shape of the user based on the 3D CAD model of the buttock of the user;
machining a support structure according to the generated 3D anatomical seat cushion to obtain the customized anatomical seat cushion.

2. The method of claim 1, further comprising repositioning the user to capture additional anthropometric measurements for specific clinical needs of the user.

3. The method of claim 1 or 2, further comprising positioning the user on a flat surface prior to capturing the anthropometric measurements.

4. The method of any one of claims 1 to 3, further comprising measuring the anthropometric measurements of the user using an anthropometer.

5. The method of any one of claims 1 to 4, further comprising measuring postural characteristics of the user.

6. The method of claim 5, the postural characteristics of the user comprising any one or a combination of pelvic tilt posterior or anterior angles, angle of the pelvic rotation and height of the popliteal fossa.

7. The method of any one of claims 1 to 6, further comprising capturing contextual measurements adapted to the user intended use of the cushion.

8. The method of any one of claims 1 to 7, further comprising generating one or more sketches in the 3D CAD model, the generation of the 3D anatomical seat cushion representation using the one or more sketches.

9. The method of claim 8, further comprising generating the 3D anatomical seat cushion representation using numerical functions applied over the one or more sketches.

10. The method of any one of claims 1 to 9, further comprising inputting one or more requirements based on a medical condition of the user.

11. The method of claim 10, the generation of the 3D anatomical seat cushion representation being further based on the inputted requirements.

12. The method of claim 10 or 11, the inputted requirement being selected from any one of width of the cushion, depth of the cushion, hardness of the foam to be used, rear distance of the cushion, size of the bevel, presence or absence of hard transfer foam, presence or absence of unequal depth areas, shape of a front area of the cushion and spacing for the sacrum of the user.

13. The method of claim 10 or 11, the inputted requirements being any one or a combination of sacral clearance, grand trochanter clearance, abduction clearance, adduction clearance and anti-thrust support.

14. The method of any one of claims 1 to 13, the machining of the support structure using polyurethane foam or polystyrene foam.

15. The method of any one of claims 1 to 14, the machining of the support structure further comprising using additive technology device.
